# EUROPEAN PATENT APPLICATION

(11) **EP 2 537 816 A1**
(43) Date of publication of application: **26.12.2012**
(21) Application number: 12171682.3
(22) Date of filing: 12.06.2012
(51) Int. Cl.: C03B 11/08, C03B 23/02, C03B 23/03

(54) **Glass manufacturing method and mould for glass manufacture**

(30) Priority: 24.06.2011 KR 20110061989
(71) Applicant: Samsung Electronics Co., Ltd., Suwon-si, Gyeonggi-do, 443-742 (KR)
(72) Inventor: Lim, Kyung Hoon, Gyeonggi-do (KR); Kang, Kyong Rok, Gyeonggi-do (KR); Seo, In Youl, Gyeonggi-do (KR); Oh, Seung Taek, Seoul (KR)
(74) Representative: Walaski, Jan Filip

(57) **Abstract**

Disclosed herein is a glass manufacturing method and a mould for glass manufacture. The glass manufacturing method includes cutting raw flat glass having a large size into a suitable size for a product, inserting the flat glass into a mould formed with a cavity having a curved surface shape to mould the flat glass so that a front face portion has a concave curved surface shape and a back face portion has a convex curved surface shape, processing the back face portion having the convex curved surface shape into a flat surface shape by a grinding process, and processing the back face portion processed into the flat surface shape to have a specular surface through a polishing process.

## Description

The present invention relates to a glass manufacturing method and a mould for glass manufacture.

A glass window mainly applied to a display of an Information Technology (IT) product is used in such a manner that flat glass is cut and is then assembled to the product. In order to enhance a design degree of freedom, a grip feeling, etc., there is an increased demand for a two point five dimensional (2.5D: a form in which a mounting surface of a display unit, such as a Liquid Crystal Display (LCD), an Active Matrix Organic Light Emitting Diode (AMOLED), or the like, is flat and an opposite surface thereof is not flat) or three dimensional (3D: a form in which both surfaces are not flat) glass window.

The method used to manufacture the 2.5D or 3D glass window is as follows. After two dimensional (2D: a form in which both surfaces are flat) raw glass is cut into a predetermined size and the cut glass is fixed to a Computer Numerical Control (CNC) machine, a whetstone mounted at the machine forms a desired shape such as a curved surface on the cut glass while moving on the cut glass along a designated path, and subsequently the surface of the cut glass along which the whetstone passes is polished.

As a result, a specular surface for the glass window is formed.

Since the glass is formed with the curved surface by a grinding process during manufacture of the glass window using the above-mentioned method, it takes a long time to process the glass and it is difficult to produce the glass window in large quantities.

Also, a polishing process is required due to poor roughness of the curved surface formed by grinding. Accordingly, the polishing process is difficult and time consuming because of being executed on the curved surface, thereby causing an increase in product price.

Therefore, it is an aspect of the present disclosure to provide a glass manufacturing method which inserts flat glass into a mould to allow the flat glass to have a curved surface shape and processes one surface of the flat glass into a flat surface.

It is another aspect to provide a mould for improvement in accuracy during moulding of flat glass to have a curved surface shape.

Additional aspects will be set forth in part in the description which follows and, in part, will be obvious from the description, or may be learned by practice of the invention.

In accordance with one aspect, a glass manufacturing method includes cutting raw flat glass having a large size into a suitable size for a product, inserting the flat glass into a mould formed with a cavity having a curved surface shape to mould the flat glass so that a front face portion has a concave curved surface shape and a back face portion has a convex curved surface shape, processing the back face portion having the convex curved surface shape into a flat surface shape by a grinding process, and processing the back face portion processed into the flat surface shape to have a specular surface through a polishing process.

The cut flat glass may be processed to have a curved shape at each corner thereof.

The cavity having the curved surface shape may be formed between an upper mould having a convex curved surface shape at a lower portion thereof and a lower mould having a concave curved surface shape at an upper portion thereof, and the flat glass may be pressed by the lower portion of the upper mould having the convex curved surface shape and the upper portion of the lower mould having the concave curved surface shape and be moulded so that the front face portion has the concave curved surface shape and the back face portion has the convex curved surface shape.

The flat glass may be loaded onto the upper portion of the lower mould and be then heated by a lower heater installed beneath the lower mould.

The flat glass may be heated by an upper heater installed above the upper mould while being pressed by the upper mould in a state of being heated by the lower heater installed beneath the lower mould.

The flat glass may be heated and pressed between the upper and lower moulds so that the front face portion has the concave curved surface shape and the back face portion has the convex curved surface shape, and be then cooled.

When the flat glass is cooled between the upper and lower moulds to complete moulding of the flat glass, the upper mould may be lifted and the moulded flat glass may be unloaded.

The flat glass may be tempered through heat treatment by heating and rapid cooling, thereby improving mechanical properties.

The flat glass may be tempered, and then a printing operation may be executed on the flat glass to print shapes such as a display area, a camera, and an icon.

After the printing operation of the flat glass is completed, an Anti-Fingerprint (AF) coating may be applied to the flat glass in a spray or deposition manner.

The flat glass may be prevented from becoming dirty due to fingerprints or dirt and foreign matter through the AF coating, and may have an improved slip feeling.

In accordance with another aspect, a mould includes a lower mould onto which flat glass is loaded, the lower mould being formed so that an upper portion thereof has a concave curved surface shape to load the flat glass, and an upper mould disposed above the lower mould to press the flat glass together with the lower mould, the upper mould being formed so that a lower portion thereof has a convex curved surface shape to press the flat glass, wherein the lower mould is manufactured by reflecting an amount of dimensional change according to a shape change before and after moulding of the flat glass and an amount of dimensional change due to thermal expansion of the lower mould and flat glass between a room temperature and a moulding temperature.

Lower and upper heaters may be respectively installed beneath the lower mould and above the upper mould, in order to heat the flat glass inserted between the lower and upper moulds.

When the flat glass is lengthened by the shape change, the lower mould may be manufactured so as to obtain dimensions of the flat glass and additional distances of the flat glass extending in length and thickness directions.

When the flat glass is lengthened by the thermal expansion according to a temperature difference, the lower mould may be manufactured so as to obtain dimensions of the flat glass and additional distances of the flat glass extending in length and thickness directions.

When the lower mould is lengthened by the thermal expansion according to a temperature difference, the lower mould may be manufactured so as to be as small as dimensions of the lower mould extending in length and thickness directions.

These and/or other aspects of the invention will become apparent and more readily appreciated from the following description of the embodiments, taken in conjunction with the accompanying drawings in which:
FIGS. 1 to 9 are views schematically illustrating a glass manufacturing method according to an exemplary embodiment of the present invention;
FIG. 10 is a view illustrating a mould according to the exemplary embodiment of the present invention; and
FIG. 11 is a view schematically illustrating a lower mould to which a dimensional change is applied according to the exemplary embodiment of the present invention.

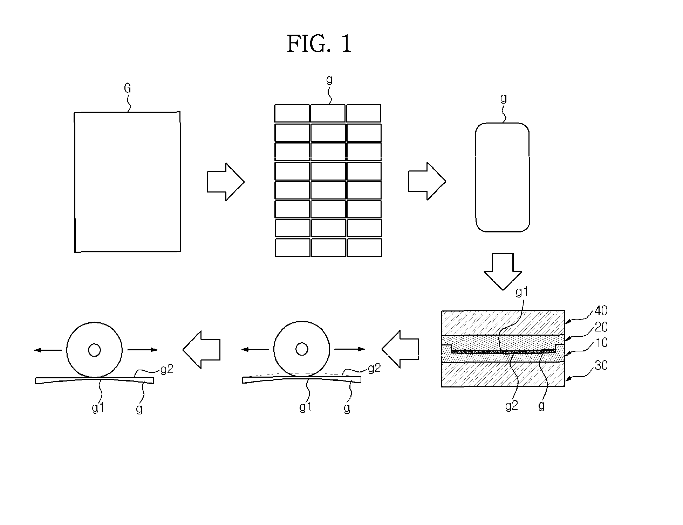

FIGS. 1 to 9 show a method of manufacturing glass broadly applied to a display of an Information Technology (IT) product.

Hereinafter, the method of manufacturing the glass applied to the display of the IT product will be described.

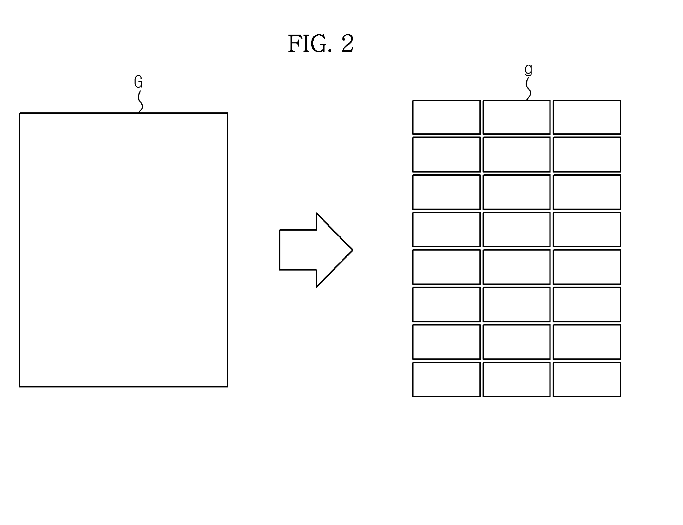

As shown in FIGS. 1 and 2, raw flat glass G having a large size is first cut into a suitable size for the product.

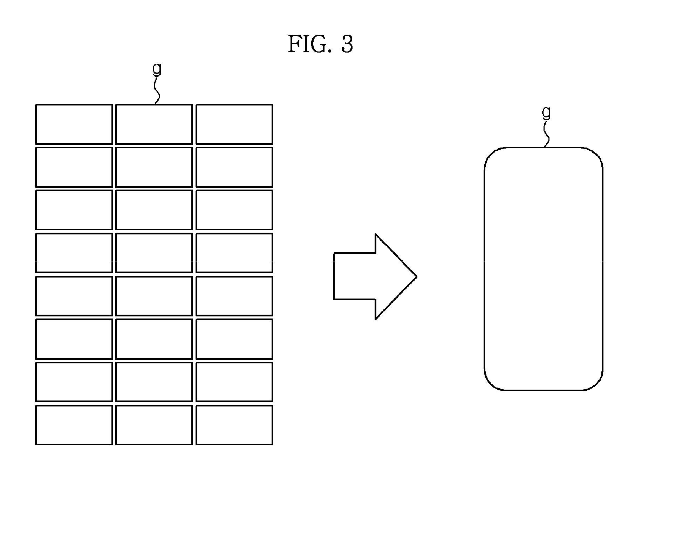

As shown in FIGS. 1 and 3, outer processing is executed upon flat glass g which is cut into the suitable size for the product, and thus the flat glass g has a curved shape at an edge thereof.

The flat glass g, in which the outer processing of the edge is finished, is processed into two point five dimensional (2.5D) glass having a form in which one surface thereof is flat and the other surface thereof is not flat.

In order to process the flat glass g into the 2.5D glass, the flat glass g is inserted into a mould 1 and the flat glass g is molded to have a curved surface shape, as shown in FIGS. 1 and 4 to 7.

The mould 1 to enable the flat glass g to have the curved surface shape includes a lower mould 10 and an upper mould 20.

The upper mould 20 is formed so that a lower portion thereof has a convex curved surface shape to press the flat glass g, whereas the lower mould 10 is formed so that an upper portion thereof has a concave curved surface shape to load the flat glass g.

Accordingly, a cavity C having a curved surface shape is formed by the lower portion of the upper mould 20 having the convex curved surface shape and the upper portion of the lower mould 10 having the concave curved surface shape. The flat glass g inserted into the mould 1 is moulded to have a curved surface shape corresponding to the shape of the cavity C.

In the flat glass g moulded to have the curved surface shape, an upper portion thereof is referred to as a front face portion g1 and has a concave curved surface shape, whereas a lower portion thereof is referred to as a back face portion g2 and has a convex curved surface shape.

Hereinafter, the following description will be given in conjunction with a process in which the flat glass g is inserted into the mould 1 and moulded to have the curved surface shape.

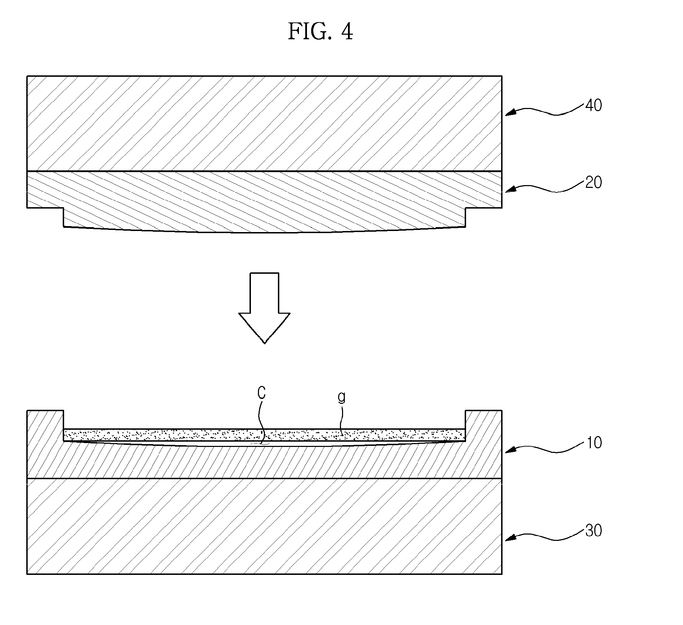

First, the flat glass g is loaded onto the upper portion of the lower mould 10 and heated by a lower heater 30 installed beneath the lower mould 10, as shown in FIG. 4, thereby entering a state in which moulding may be easily carried out.

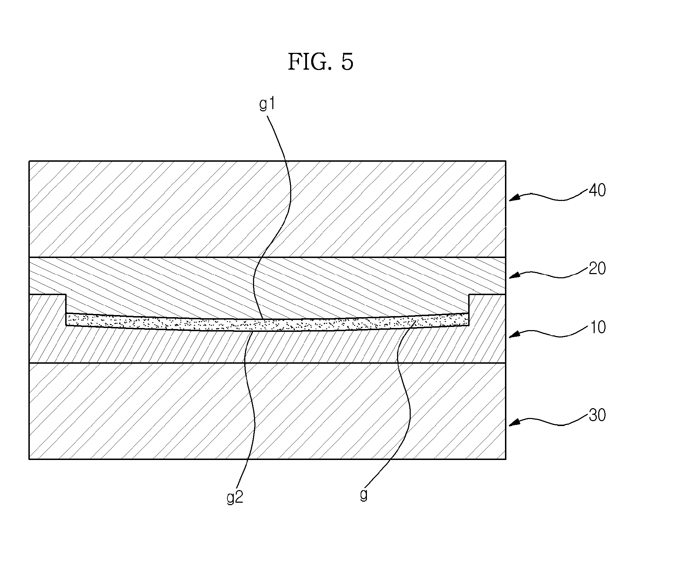

When heated to the state in which moulding may be easily carried out, the flat glass g is pressed by the upper mould 20 installed above the lower mould 10, as shown in FIG. 5. The flat glass g is heated by an upper heater 40 installed above the upper mould 20 and the lower heater 30 installed beneath the lower mould 10 while being pressed by the upper mould 20.

The flat glass g enters the state in which moulding may be easily carried out while being heated by the upper and lower heaters 40 and 30, and is then moulded to have the curved surface shape by pressure of the upper mould 20.

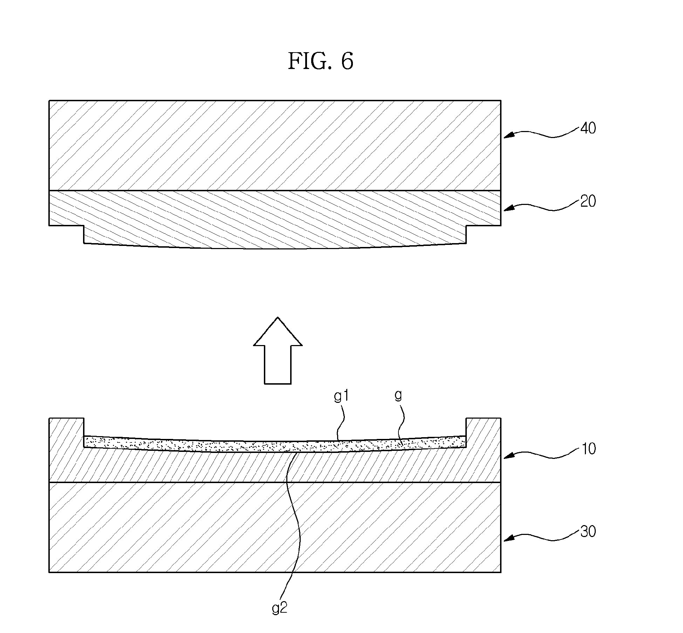

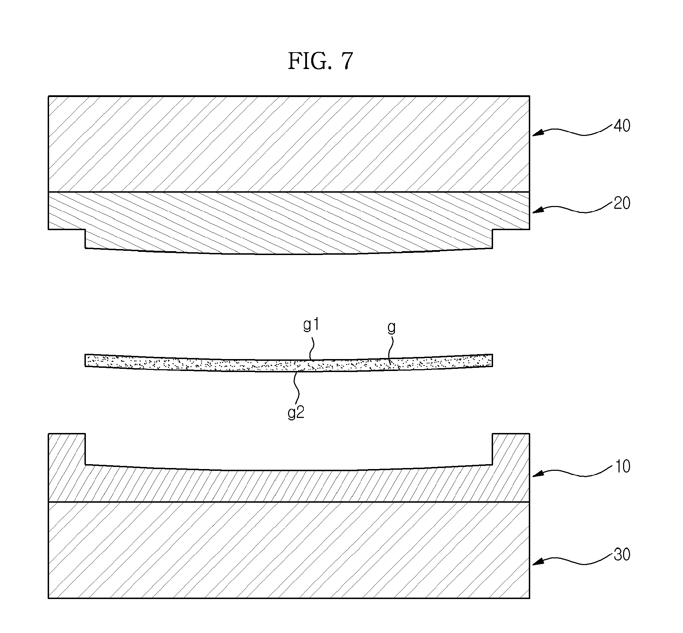

When completely moulded to have the curved surface shape, the flat glass g is cooled for a proper time. Thereafter, the upper mould 20 is lifted and the moulded flat glass g is unloaded from the lower mould 10, as shown in FIGS. 6 and 7.

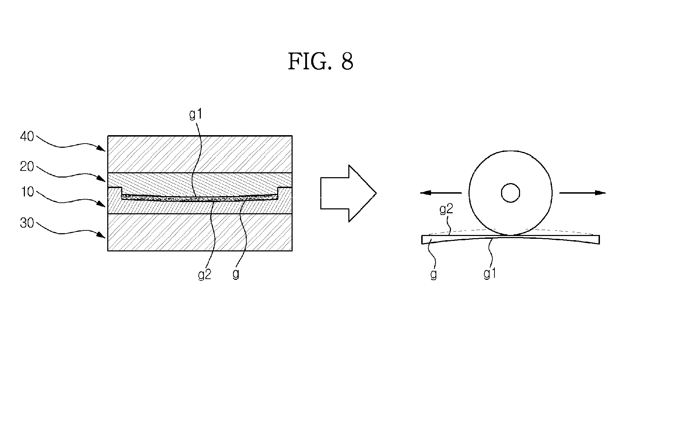

As shown in FIGS. 1 and 8, in the flat glass g unloaded from the lower mould 10, the front face portion g1 has the concave curved surface shape, whereas the back face portion g2 has the convex curved surface shape. For this reason, the back face portion g2 is processed to have a flat surface shape by a grinding process.

Since the grinding process is executed on the back face portion g2 having the convex curved surface shape, processing time may be considerably shortened in addition to an easy processing, compared with a case of processing the flat surface into the curved surface by the grinding process.

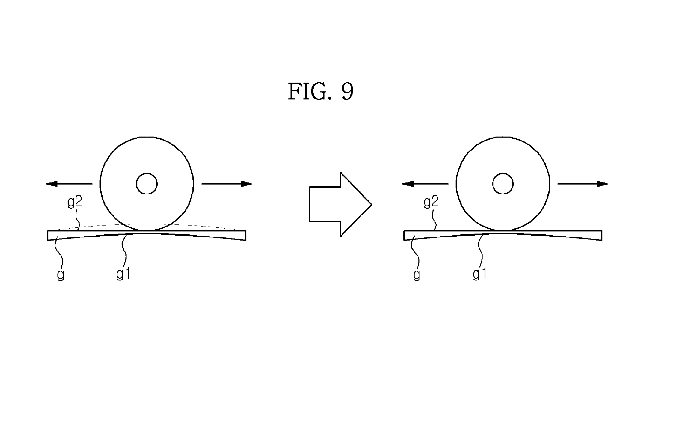

When the flat glass g is processed so that the front face portion g1 has the concave curved surface shape and the back face portion g2 has the flat surface shape, a polishing process is executed on the back face portion g2 so that the back face portion g2 processed by grinding may have a smooth specular surface, as shown in FIGS. 1 and 9.

Since the front face portion g1 of the flat glass g having the concave curved surface shape is moulded by the mould 1, the front face portion g1 may be moulded to have the smooth specular surface even without execution of a special polishing process, thereby having an aesthetically pleasing external appearance of glass itself.

When the back face portion g2 of the flat glass g is processed to have the specular surface through the polishing process, the flat glass g may be tempered through heat treatment by heating and rapid cooling.

The flat glass g tempered through heat treatment may attain improved mechanical properties such as bending strength, impact resistance, heat resistance, etc., compared with general glass.

When the flat glass g is completely tempered, a printing operation may be executed on the flat glass g to print shapes such as a display area, a camera, an icon, etc.

In order to print the above-mentioned shapes on the flat glass g, a silk screen or offset printing method may be utilized.

Ink, which is used for the above-mentioned printing method, should have rapid drying and superior sticking properties. When the printing operation is completed, the flat glass g is moved to a calcining furnace and is then heated and cooled. As a result, glassy pigment is fused to a surface of the flat glass g while an oil component of the ink is removed.

When the printing operation of the flat glass g is completed, an Anti-Fingerprint (AF) coating may be applied to the flat glass g.

The AF coating of the flat glass g may be performed in a spray or deposition manner.

The AF coating of the flat glass g refers to a fingerprint resistant coating. When the AF coating is executed on the flat glass g, it may be possible to prevent the flat glass g from becoming dirty due to fingerprints or filth and foreign matter.

Also, the flat glass g may have an improved slip feeling for a multi-touch or the like through the AF coating.

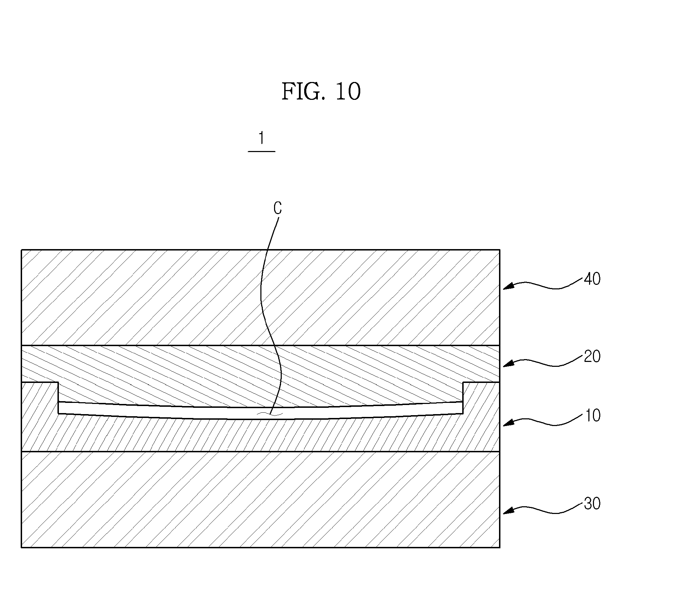

FIG. 10 shows the mould to allow the flat glass to be moulded to have the curved surface shape during manufacture of the glass.

The mould 1 includes the lower mould 10 onto which the flat glass g is loaded and the upper mould 20 installed above the lower mould 10 to press the flat glass g. The lower heater 30 is installed beneath the lower mould 10 to heat the flat glass g, and the upper heater 40 is installed above the upper mould 20 to heat the flat glass g.

The lower mould 10 is formed so that the upper portion thereof has the concave curved surface shape to load the flat glass g, whereas the upper mould 20 is formed so that the lower portion thereof has the convex curved surface shape to press the flat glass g.

Although showing that the upper portion of the lower mould 10 is formed in the concave curved surface shape and the lower portion of the upper mould 20 is formed in the convex curved surface shape in the illustrated drawings, the upper and lower portions of the respective lower and upper moulds 10 and 20 may be variously manufactured depending on a desired shape of the flat glass g to be moulded.

The cavity C is formed by the upper portion of the lower mould 10 having the concave curved surface shape and the lower portion of the upper mould 20 having the convex curved surface shape. The flat glass g is loaded onto the lower mould 10 and moulded so as to correspond to the shape of the cavity C within the cavity C, such that the front face portion g1, which is the upper portion of the flat glass g, has the concave curved surface shape and the back face portion g2, which is the lower portion of the flat glass g, has the convex curved surface shape.

The flat glass g loaded onto the lower mould 10 is heated to a high temperature by the lower heater 30 installed beneath the lower mould 10, thereby entering the state in which moulding may be easily carried out. In addition, the flat glass g is also heated by the upper heater 40 installed above the upper mould 20 when being pressed by the upper mould 20, and thus may be easily moulded due to pressure of the upper mould 20.

In this case, since the flat glass g loaded onto the lower mould 10 is moulded to have the curved surface shape, a dimensional difference is generated in length of the flat glass before and after moulding.

If the lower mould 10 is manufactured to match the dimensions of the flat glass g owing to generation of the dimensional difference before and after moulding of the flat glass g, there may be a problem of accuracy during moulding of the flat glass g.

Accordingly, in order to attain improvement in accuracy during moulding of the flat glass g by the mould 1, the lower mould 10 onto which the flat glass g is loaded should be manufactured by allowing for the dimensional difference before and after moulding of the flat glass g.

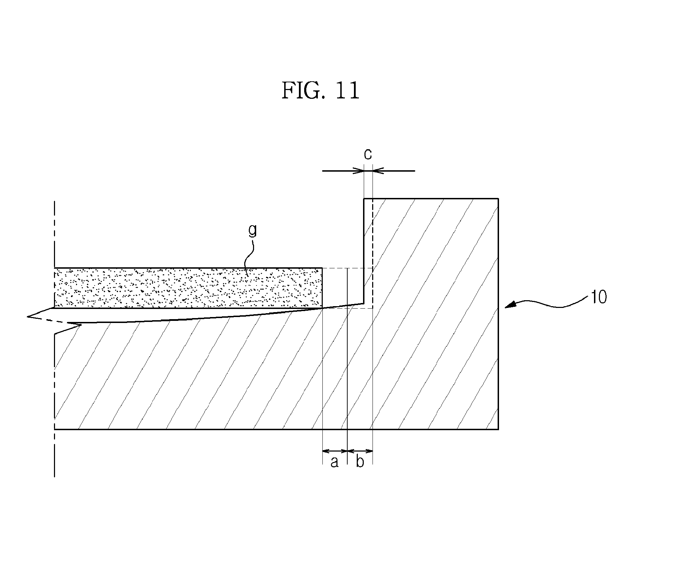

For example, when the flat glass g is lengthened after moulding, the lower mould 10 is manufactured so as to additionally obtain a length a of the flat glass g which extends than an original length by a shape change, as shown in FIG. 11.

Although mentioned above only with regard to a length direction among the dimensions of the lower mould 10, the lower mould 10 may also be manufactured by applying an amount of dimensional change in a thickness direction before and after moulding of the flat glass g.

Since the flat glass g is also heated to a high temperature and moulded, there may be generated a dimensional change due to thermal expansion according to a temperature difference, in addition to the dimensional change generated due to the shape change by moulding of the flat glass g.

Thus, the lower mould 10 should also be manufactured by allowing for an amount of dimensional change of the flat glass g generated due to the thermal expansion according to the above-mentioned temperature difference.

For example, when the flat glass g is lengthened at a high moulding temperature than at the room temperature, the lower mould 10 is manufactured so as to additionally obtain a length b of the flat glass g which extends than an original length by a temperature change, as shown in FIG. 11.

Although mentioned above only with regard to the length direction among the dimensions of the lower mould 10, the lower mould 10 may also be manufactured by applying the amount of dimensional change in the thickness direction before and after moulding of the flat glass g.

The thermal expansion according to the temperature difference may also be generated in the lower mould 10 as well as the flat glass g.

Therefore, the lower mould 10 should also be manufactured by allowing for an amount of dimensional change of the lower mould 10 generated due to the thermal expansion according to the above-mentioned temperature difference.

For example, when the lower mould 10 is lengthened at a higher moulding temperature than at the room temperature, the lower mould 10 is manufactured so as to be as small as a length c extending by the thermal expansion, as shown in FIG. 11.

Although mentioned above only with regard to the length direction among the dimensions of the lower mould 10, the lower mould 10 may also be manufactured by applying an amount of dimensional change in a thickness direction before and after moulding of the lower mould 10.

As a result, the amount of dimensional change according to the shape change before and after moulding of the flat glass g and the amount of dimensional change due to the thermal expansion according to the temperature difference of the lower mould 10 and flat glass g should be reflected, in order to attain improvement in accuracy of the flat glass g moulded during manufacture of the lower mould 10. Accordingly, the lower mould 10 is manufactured so as to additionally obtain the length a of the flat glass g extending by the shape change and the length b of the flat glass g extending by the thermal expansion according to the temperature difference while being manufactured so as to be as small as the length c extending by the thermal expansion according to the temperature difference, as shown in FIG. 11.

As is apparent from the above description, flat glass is moulded to have a curved surface shape through a mould, thereby enabling processing time for manufacture of two point five dimensional (2.5D) glass to be shortened in addition to mass production. Furthermore, an aesthetically pleasing external appearance of glass itself may be maintained even without execution of a polishing process upon the curved surface shape.

Also, when flat glass is moulded to have a curved surface shape, accuracy of the flat glass may be improved.

Although a few embodiments of the present invention have been shown and described, it would be appreciated by those skilled in the art that changes may be made in these embodiments without departing from the principles of the invention, the scope of which is defined in the claims.

## Claims

1. A glass manufacturing method comprising:
cutting raw flat glass having a large size into a suitable size for a product;
inserting the flat glass into a mould formed with a cavity having a curved surface shape to mould the flat glass so that a front face portion has a concave curved surface shape and a back face portion has a convex curved surface shape;
processing the back face portion having the convex curved surface shape into a flat surface shape by a grinding process; and
processing the back face portion processed into the flat surface shape to have a specular surface through a polishing process.

2. The glass manufacturing method according to claim 1, wherein the cavity having the curved surface shape is formed between an upper mould having a convex curved surface shape at a lower portion thereof and a lower mould having a concave curved surface shape at an upper portion thereof, and the flat glass is pressed by the lower portion of the upper mould having the convex curved surface shape and the upper portion of the lower mould having the concave curved surface shape and is moulded so that the front face portion has the concave curved surface shape and the back face portion has the convex curved surface shape.

3. The glass manufacturing method according to claim 2, wherein the flat glass is loaded onto the upper portion of the lower mould and is then heated by a lower heater installed beneath the lower mould.

4. The glass manufacturing method according to claim 3, wherein the flat glass is heated by an upper heater installed above the upper mould while being pressed by the upper mould in a state of being heated by the lower heater installed beneath the lower mould.

5. The glass manufacturing method according to claim 4, wherein the flat glass is heated and pressed between the upper and lower moulds so that the front face portion has the concave curved surface shape and the back face portion has the convex curved surface shape, and is then cooled.

6. The glass manufacturing method according to claim 5, wherein when the flat glass is cooled between the upper and lower moulds to complete moulding of the flat glass, the upper mould is lifted and the moulded flat glass is unloaded.

7. The glass manufacturing method according to any one of the preceding claims, wherein the flat glass is tempered through heat treatment by heating and rapid cooling, thereby improving mechanical properties.

8. The glass manufacturing method according to claim 7, wherein the flat glass is tempered, and then a printing operation is executed on the flat glass to print shapes such as a display area, a camera, and an icon.

9. The glass manufacturing method according to claim 8, wherein after the printing operation of the flat glass is completed, an Anti-Fingerprint (AF) coating is applied to the flat glass in a spray or deposition manner.

10. The glass manufacturing method according to claim 9, wherein the flat glass is prevented from becoming dirty due to fingerprints or dirt and foreign matter through the AF coating, and has an improved slip feeling.

11. A mould comprising:
a lower mould onto which flat glass is loaded, the lower mould being formed so that an upper portion thereof has a concave curved surface shape to load the flat glass; and
an upper mould disposed above the lower mould to press the flat glass together with the lower mould, the upper mould being formed so that a lower portion thereof has a convex curved surface shape to press the flat glass,
wherein the lower mould is manufactured by reflecting an amount of dimensional change according to a shape change before and after moulding of the flat glass and an amount of dimensional change due to thermal expansion of the lower mould and flat glass between a room temperature and a moulding temperature.

12. The mould according to claim 11, wherein lower and upper heaters are respectively installed beneath the lower mould and above the upper mould, in order to heat the flat glass inserted between the lower and upper moulds.

13. The mould according to claim 11, wherein when the flat glass is lengthened by the shape change, the lower mould is manufactured so as to obtain dimensions of the flat glass and additional distances of the flat glass extending in length and thickness directions.

14. The mould according to claim 11, wherein when the flat glass is lengthened by the thermal expansion according to a temperature difference, the lower mould is manufactured so as to obtain dimensions of the flat glass and additional distances of the flat glass extending in length and thickness directions.

15. The mould according to claim 11, wherein when the lower mould is lengthened by the thermal expansion according to a temperature difference, the lower mould is manufactured so as to be as small as dimensions of the lower mould extending in length and thickness directions.
